# EUROPÄISCHE PATENTANMELDUNG

(11) **EP 1 962 068 A1**
(43) Veröffentlichungstag der Anmeldung: **27.08.2008**
(21) Anmeldenummer: 08001098.6
(22) Anmeldetag: 22.01.2008
(51) Int. Cl.: G01G 19/18, B66C 13/16

(54) **Vorrichtung zum Ermitteln der Last eines Kranauslegers.**

(30) Priorität: 22.02.2007 DE 102007009249
(71) Anmelder: Schenck Process GmbH, 64293 Darmstadt (DE)
(72) Erfinder: Ehmke, Fritz, 64397 Modautal (DE); Esswein, Udo, 64807 Dieburg (DE)
(74) Vertreter: Blumbach - Zinngrebe

(57) **Zusammenfassung**

Die Erfindung betrifft ein Verfahren zum Messen des Gewichtes einer an einem Seil hängenden, vornehmlich schüttfähigen Nutzlast, wobei das Seil über einen Kopf eines verschwenkbaren Auslegers eines wenigstens vorübergehend auf Grund fixierten Turmdrehkrans geführt und am Turmdrehkran verankert ist. Um eine möglichst genaue Messung des Gewichts, die beispielsweise Grundlage für die Ermittlung einer Frachtrate sein kann, zu ermöglichen, ist vorgesehen, dass eine erste Gewichtskraft und eine zweite, zur ersten Gewichtskraft senkrechte Gewichtskraft gleichzeitig gemessen und die Messwerte einer elektronischen Auswerteeinrichtung zugeführt werden, wobei die Summe aus erster und zweiter Gewichtskraft proportional zu der Gewichtskraft der Nutzlast ist.

## Beschreibung

Die Erfindung betrifft ein Verfahren zum Messen des Gewichtes einer an einem Seil hängenden, vornehmlich schüttfähigen Nutzlast, wobei das Seil über einen Kopf eines verschwenkbaren Auslegers eines wenigstens vorübergehend auf Grund fixierten Turmdrehkrans geführt und am Turmdrehkran verankert ist, sowie eine Vorrichtung zur Durchführung des Verfahrens.

Zum Umschlag einer Last, beispielsweise Sand, Erz, Mineralien oder Kohle in ein Transportmittel oder auf Halde mittels eines Kranes ist die Kenntnis des Gewichtes der Last wichtig, welche der Greifer des Krans in das Transportmittel oder auf Halde übergeben hat. Denn oft, insbesondere bei Schiffen, bestimmt sich die Frachtrate des Transportmittels nach dem vom Transportmittel insgesamt tatsächlich aufgenommenen Gesamtgewicht. Dieses Gesamtgewicht ergibt sich durch Addition der Gewichte, die der Greifer bei jeder Abladeoperation in das Transportmittel oder auf Halde abgegeben hat. Eine Bestimmung des Gesamtgewichtes kann bisher beispielsweise durch die sogenannte Schiffseiche erfolgen, was jedoch nur sehr ungenaue Werte ergibt.

Der Erfindung liegt daher die Aufgabe zugrunde, Maßnahmen vorzusehen, die eine möglichst genaue Messung des Gewichtes, die beispielsweise Grundlage für die Ermittlung einer Frachtrate sein kann, ermöglichen.

Dazu sieht die Erfindung bei dem eingangs genannten Verfahren vor, dass eine erste Gewichtskraft und eine zur ersten Gewichtskraft senkrechte zweite Gewichtskraft gleichzeitig gemessen und die Messwerte einer elektronischen Auswerteeinrichtung zugeführt werden, wobei die Summe aus erster und zweiter Gewichtskraft proportional zu der Gewichtskraft der Last ist. Damit wird es möglich, das Gewicht an irgendeiner Stellung des Auslegers innerhalb des für ihn zulässigen Auslegerwinkels zur Horizontalen zuverlässig zu messen.

Wenn das Seil über am Kopf vorgesehene Rollen geführt wird, sieht eine bevorzugte Ausgestaltung der Erfindung vor, dass die erste und die zweite Gewichtskraft an Lagern der Rolle gemessen werden. Ferner ist es zweckmäßig, wenn zur Messung ein oder mehrere insbesondere eichfähige Kraftaufnehmer verwendet werden. Als Kraftaufnehmer empfiehlt es sich vorzugsweise Wägezellen und/oder Wägebalken zu verwenden. Die Genauigkeit der Messung wird verbessert, wenn in Ausgestaltung der Erfindung die Erfassung der ersten Gewichtskraft von der Erfassung der zweiten Gewichtskraft mechanisch querkraftentkoppelt wird. Ferner empfiehlt es sich, den Auslegerwinkel zu erfassen und als ein erstes Korrektursignal der Auswerteeinrichtung zuzuführen. Im gleichen Sinne ist es empfehlenswert, jeweils die Länge des Seiles zwischen der Nutzlast und der Seilrolle zu erfassen, ihr Gewicht zu bestimmen und als zweites Korrektursignal der Auswerteeinrichtung zuzuleiten. Schließlich dient es der Bediensicherheit, daß der zu einem vorgegebenen Maximalgewicht zulässige Schwenkwinkelbereich des Auslegers ermittelt wird und zwar vorteilhafterweise in einer Kransteuerung, wobei im Rahmen der Erfindung der zulässige Schwenkwinkelbereich zweckmäßig der Auswerteeinrichtung zur Verfügung gestellt wird.

Eine zur Durchführung des erfindungsgemäßen Verfahrens geeignete Meßvorrichtung sieht vor, dass bei einem wenigstens vorübergehend auf Grund fixierten Turmdrehkran mit einem schwenkbaren, einen Kopf aufweisenden Ausleger, an welchem eine Seilrolle drehbar gelagert ist, um welche wenigstens ein Seil geführt ist und an dem eine Nutzlast hängen kann, die Seilrolle sich einerseits auf einem ersten Kraftaufnehmer zur Erfassung einer ersten Gewichtskraft und auf wenigstens einem zweiten Kraftaufnehmer zur Erfassung einer zur ersten Gewichtskraft senkrechten, zweiten Gewichtskraft abstützt, und dass die Ausgangssignale der bevorzugt eichfähigen Kraftaufnehmer über Ausgangssignalleitungen einer elektronischen Auswerteeinrichtung zugeführt sind. Zweckmäßig sind die ersten und/oder die zweiten Kraftaufnehmer Wägezellen und/oder Wägebalken.

Eine Meßvorrichtung mit wiederholbarer Genauigkeit der Messungen ergibt sich in einer Weiterbildung der Erfindung, wenn die ersten und die zweiten Kraftaufnehmer eichfähig sind, wozu sich die Verwendung von Wägezellen und/oder Wägebalken empfiehlt. Zweckmäßig weist der Kopf des Auslegers eine Tragplatte auf, auf welcher sich wenigstens ein erster Kraftaufnehmer abstützt. Für die Anordnung der zweiten Kraftaufnehmer ist vorteilhaft, wenn eine Welle, auf der die Seilrolle drehbar sitzt, in wenigstens einem Arm gelagert ist, welcher sich über wenigstens einen zweiten Kraftaufnehmer auf einem sich quer zur Tragplatte erstreckenden und mit der Tragplatte kraftschlüssig verbundenen Balken abstützt. Eine einfache Ausführungsform dieses Konzeptes sieht vor, dass der Arm an einem zweifüßigen Joch aufgehängt ist, wobei zwischen jedem der beiden quer zur zweiten Gewichtskraft beabstandeten Jochfüße und dem Balken je ein zweiter Kraftaufnehmer vorgesehen ist. Ist in bevorzugter Ausgestaltung die Welle in zwei parallelen und beabstandeten Armen gelagert, wobei die Seilrolle zwischen beiden Armen angeordnet ist, dann empfiehlt es sich, beide Arme an einem vierfüßigen Joch aufzuhängen.

Weiterhin ist es vorteilhaft, zwischen dem ersten Kraftaufnehmer und dem zweiten Kraftaufnehmer eine Querkraft-Entkopplung vorzusehen. Damit wird erreicht, dass Querkräfte keinen Einfluß auf die von den Kraftaufnehmern gemessenen Kräfte haben können, dass also beispielsweise der erste Kraftaufnehmer von Kräften unbeeinflußt bleibt, die der zweite Kraftaufnehmer messen soll. Als mögliche Ausführungsform bietet sich an, dass zwischen dem Arm und den zweiten Kraftaufnehmern die Querkraft-Entkopplung, etwa in Form von Blattfedern vorgesehen ist, wobei die Blattfedern in Richtung der zweiten Gewichtskraft steif und gegenüber anderen Kraftrichtungen weich sind. Zweckmäßig ist eine weitere Querkraftentkopplung an den ersten Kraftaufnehmern vorgesehen, die vor allem dann, wenn sie Wägezellen sind, Pendeldruckstücke sein können.

Eine weitere, konstruktiv besonders einfache Ausführungsform der Erfindung sieht vor, dass der erste und der zweite Kraftaufnehmer in einen Radialkraftaufnehmer integriert sind, welcher mehrere elektromechanische Wandler, beispielsweise in Form von mehreren Dehnungsmeßstreifen, zur Erfassung der ersten und der zweiten Gewichtskraft aufweist. Eine Ausgestaltung dieses Konzepts besteht darin, dass der Radialkraftaufnehmer wenigstens eine sich auf dem Kopf des Auslegers abstützende scheibenförmige Platte aufweist, die auf der Welle, auf der die Seilrolle drehbar sitzt, befestigt ist und auf der die elektromechanischen Wandler appliziert sind. Letztere sind zweckmäßig auf der scheibenförmigen Platte in Umfangsrichtung gleich beabstandet angebracht. Zur Verbesserung des Messergebnisses ist es günstig, wenn beiderseits der Seilrolle je eine die elektromechanischen Wandler tragende scheibenförmige Platte auf der Welle befestigt ist.

Weitere bevorzugte Ausführungsformen der Erfindung sind in den Unteransprüchen angegeben. Nachstehend wird ein Ausführungsbeispiel der Erfindung anhand der beigefügten Zeichnung im Einzelnen beschrieben. Es zeigen:
- Figur 1:: eine schematische Seitenansicht eines Turmdrehkrans zur Be- oder Entladung eines Wasserfahrzeuges, der mit den Merkmalen der Erfindung ausgerüstet ist;
- Figur 2:: eine schematische prinzipielle Anordnung der Erfindung;
- Figur 3:: eine elektronische Auswerteeinrichtung als Bestandteil der Anordnung nach Figur 2;
- Figur 4:: eine schematische mehr ins Einzelne gehende Ausführungsform der Anordnung nach Figur 2,
- Figur 5: eine schematische Ansicht einer weiteren Ausführungsform der Anordnung nach Figur 2, und
- Figur 6: eine schematische Seitenansicht der Anordnung nach Figur 5.

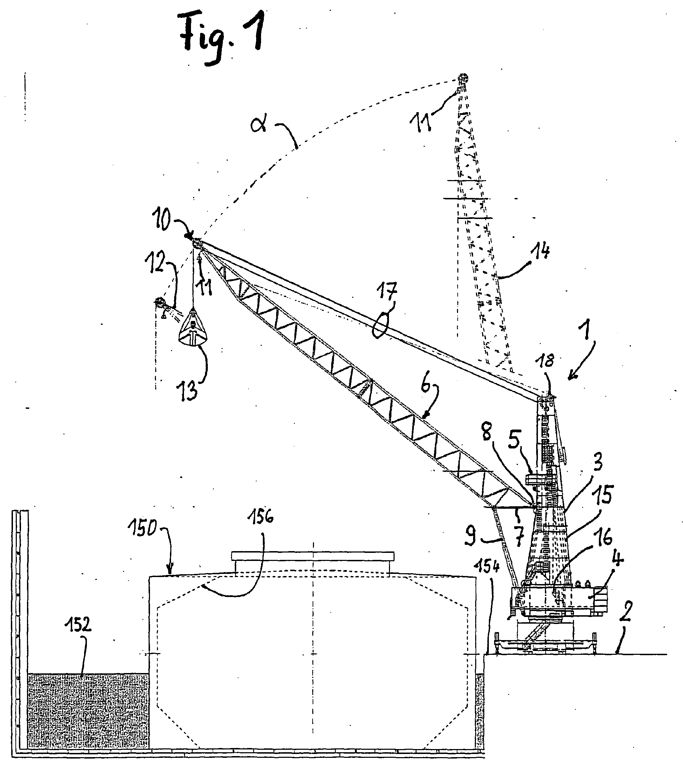

Der im Ganzen mit 1 bezeichnete Turmdrehkran weist einen wenigstens vorübergehend auf Grund 2 fixierten Turm 3 auf, der mit einem Maschinenhaus 4 sowie mit einer Kranführerkabine 5 ausgerüstet ist Das Maschinenhaus 4 umfasst Antriebsmotore für das Anheben und Absenken eines am mittleren Abschnitt des Turmes 3 bei 8 angelenkten Auslegers 6, dessen Basis 7 sich am vom Anlenkpunkt 8 entfernten Ende auf einem mit den Antriebsmotoren gekoppelten Hubzylinder 9 abstützt. Der Ausleger 6 ist daher über einen mit α bezeichneten Schwenkwinkel zwischen einer tiefsten Stellung 12 und einer höchsten Stellung 14, die beide nur gestrichelt angedeutet sind, verschwenkbar. Im Übrigen zeigt Figur 1 schematisch einen oberen Teil eines in einem Gewässer 152 nahe einer Kaimauer 154 schwimmenden Lastkahns 150, in dessen Bunker 156 die Nutzlast von einem am Ausleger 6 hängenden Greifer 13 einzubringen ist.

Zwischen einer in dem Maschinenhaus 4 beherbergten und angetriebenen Seiltrommel 16 und dem Kopf 10 des Auslegers 6 verläuft ein im Ganzen mit 15, 17 bezeichneter, an der Seiltrommel 16 befestigter Seilzug über an der Spitze des Turms 3 gelagerte Seilrollen 18. Dieser Seilzug umfasst sowohl für die Erfindung wesentliche Halteseile, die das Gewicht der von einem Greifer 13 aufgenommenen Nutzlast tragen, wie auch Schließseile zum Öffnen und Schließen des Greifermauls. Funktion und Verlauf der Schließseile werden hier nicht näher erläutert

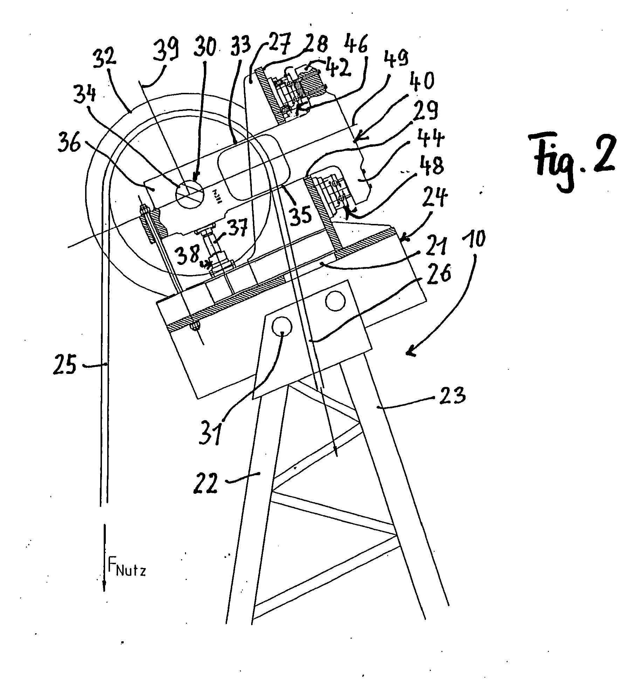

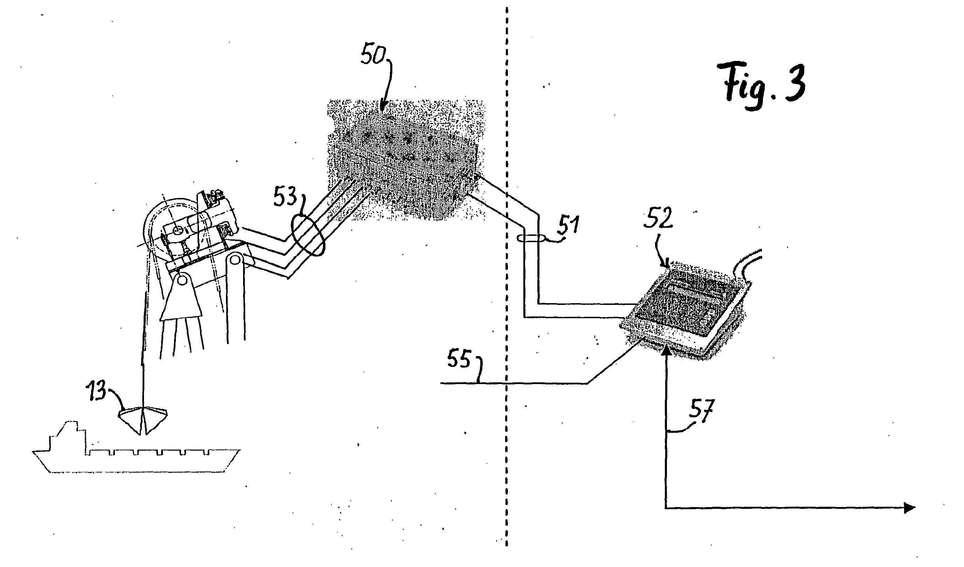

Nachfolgend wird zunächst anhand der Figuren 2 und 3 das Prinzip des erfindungsgemäßen Verfahrens zum besseren Verständnis der später zu erläuternden mehr ins Einzelne gehenden praktischen Ausführungsform dargestellt. Figur 2 zeigt zunächst den Kopf 10 des Auslegers 6, der am äußeren Ende zwei Stützen 22 und 23 aufweist, an denen eine massive Tragplatte 24 befestigt ist. Die Tragplatte 24 weist eine Öffnung 21 auf, um den Durchtritt eines Seilabschnittes 26 zu ermöglichen. Ferner steht von der Tragplatte 24 ein mit einer Stütze 27 versehener plattenförmiger Winkel 28 rechtwinkelig ab, der ebenfalls eine Öffnung 29 aufweist.

Das Ende einer Welle 30, auf der eine Seilrolle 32 drehbar gelagert ist, ist in einem Lager 34 gehalten, welches in eine Bohrung eines Armes 36 eingepaßt ist Der Arm- 36 stützt sich über ein Zwischenstück 37 auf einem Kraftaufnehmer 38 ab, welcher auf der Tragplatte 24 befestigt ist Der Kraftaufnehmer 38 kann vorzugsweise eine sogenannte Wägezelle sein, für die ein Beispiel in dem Dokument DE 39 37 318 C1 beschrieben ist und deren Krafteinleitungsteil von dem Zwischenstück 37 beaufschlagt und deren Kraftausleitungsteil auf der Tragplatte 24 festgelegt ist. Das Zwischenstück (Pendeldruckstück) 37 liegt mit balliger Fläche auf dem Krafteinleitungsteil auf, so dass die Wägezelle von quer zur Längsachse des Pendeldruckstückes 37 wirkenden Kräften unbeeinflußt bleibt Das Zwischenstück 37 wirkt daher für die Wägezelle 38 als Querkraftentkopplung. Auf dem Verformungskörper der Wägezelle sind elektromechanische Wandler etwa in Form von Dehnungsmeßstreifen befestigt, die eine mechanische Verformung des Verformungskörpers unter dem Einfluß einer in das Krafteinleitungsteil eingeleiteten Kraft in elektrische Signale umwandeln. Die Ausgangssignalleitungen aus der Wägezelle sind nicht dargestellt. Der Kraftaufnehmer 38 nimmt also Kräfte auf, die längs der Linie 39, das heißt senkrecht zur Tragplatte 24 weisen.

Der Arm 36 ist über dünne Streifen 33, 35 mit einem T-Stück 40 mit zwei gegenüberliegenden Querstücken 42, 44 verbunden, die sich auf dem Winkel 28 über je einen weiteren Kraftaufnehmer 46, 48 abstützen. Jeder der beiden Kraftaufnehmer 46, 48 kann grundsätzlich durch eine Wägezelle realisiert sein, es empfiehlt sich jedoch im Sinne einer möglichst genauen Kraftmessung, für jeden der Kraftaufnehmer 46, 48 einen Wägebalken einzusetzen. Wägebalken haben ebenso wie die Wägezellen ein Krafteinleitungsteil, das mit dem Querstück 42 oder 44 verbunden ist und von diesen mit Kraft beaufschlagt wird, sowie ein Kraftausleitungsteil, welches auf dem Winkel 28 festgelegt ist, und ein zwischengelegtes Verformungsstück, welches sich im Wesentlichen linear und parallel zu den Krafteinleitungs- und Kraftausleitungsteilen erstreckt, während der Verformungskörper einer Wägezelle prinzipiell rotationssymmetrisch ist Die von den Querstücken 42, 44 auf die Kraftaufnehmer 46, 48 einwirkende Kraft ist parallel zur Linie 49 gerichtet, steht also senkrecht auf derjenigen Kraft, die auf den Kraftaufnehmer 38 einwirkt.

Die Kraftaufnehmer 38 sowie 46, 48 sind zweckmäßig eichfähig, eine Eigenschaft, die für die erwähnten Wägezellen und Wägebalken ohne weiteres erfüllt ist. Damit gelingt eine durch das Eichgesetz vorgeschriebene Genauigkeit und Wiederholbarkeit der Kraftmessung, was für die genaue Ermittlung von Transportkosten und die Erstellung von Geschäftsbelegen, die zur Angabe des umgeschlagenen Gutes dessen Gewicht enthalten, erwünscht ist.

Die auf den mit dem Greifer 13 verbundenen Seilabschnitt 25 vertikal nach unten gerichtete Gewichtskraft wird daher bei jeder Winkelstellung des Auslegers 6 in eine erste Gewichtskraft, die parallel zur Linie 39 gerichtet ist, und in eine zur ersten Gewichtskraft senkrechte zweite Gewichtskraft zerlegt, die parallel zur Linie 49 gerichtet ist, wobei die vektorielle Summe der ersten und der zweiten Gewichtskraft der auf den Seilabschnitt 25 wirkenden Gewichtskraft proportional ist.

Die oben erwähnten dünnen Streifen 33, 35 sind Blattfederstücke, welche in Richtung ihrer Fläche steif, jedoch gegenüber Kräften, die nicht in Richtung ihrer Fläche weisen, weich sind. Damit wird zusätzlich zu den Pendeldruckstücken 37 eine Entkopplung des gegenseitigen Einflusses der ersten und der zweiten Gewichtskraft während ihrer Messung durch die zugehörigen Kraftaufnehmer erreicht.

Gemäß Figur 3 werden die Ausgangssignalleitungen 53 aus den Kraftaufnehmern 38, 46, 48 einem Rechner 50 zugeführt, der aus den aufgenommenen Signalen die im Greifer 13 enthaltene Nutzlast und den Winkel des Auslegers 6 gegen die Horizontale erhält, die Gewichtskraft berechnet und über zu einem Anzeigegerät 52 führende Signalleitungen 51 entsprechend die Anzeige auf dem in der Kabine 5 des Kranführers befindlichen Anzeigegerät 52 steuert. Dazu dient ein am Ausleger 6 angebrachter nicht im Einzelnen dargestellter Sensor 11, der den Auslegerwinkel erfasst und sein Ausgangssignal als erstes Korrektursignal über Leitung 55 dem Anzeigegerät 52 zuführt. In der Kransteuerung wird der aus statischen Gründen zulässige Winkelbereich α des Auslegers 6 bestimmt und veranlasst, dass das Anzeigegerät 52 den ermittelten zulässigen Winkelbereich dem Kranführer zur Anzeige bringt. Weiter ist am Ausleger 6 eine nicht gezeigte Einrichtung vorgesehen, die die jeweilige Länge des von der Seilrolle 32 bis zum Greifer 13 reichenden Seilabschnittes 25 und daraus das Gewicht des Seilabschnittes 25 berechnet und als zweites Korrektursignal über Leitung 57 dem Anzeigegerät 52 zuführt. Alternativ kann die jeweilige Länge des Seilabschnittes 25 an den Seiltrommeln im Maschinenhaus 4 ermittelt werden.

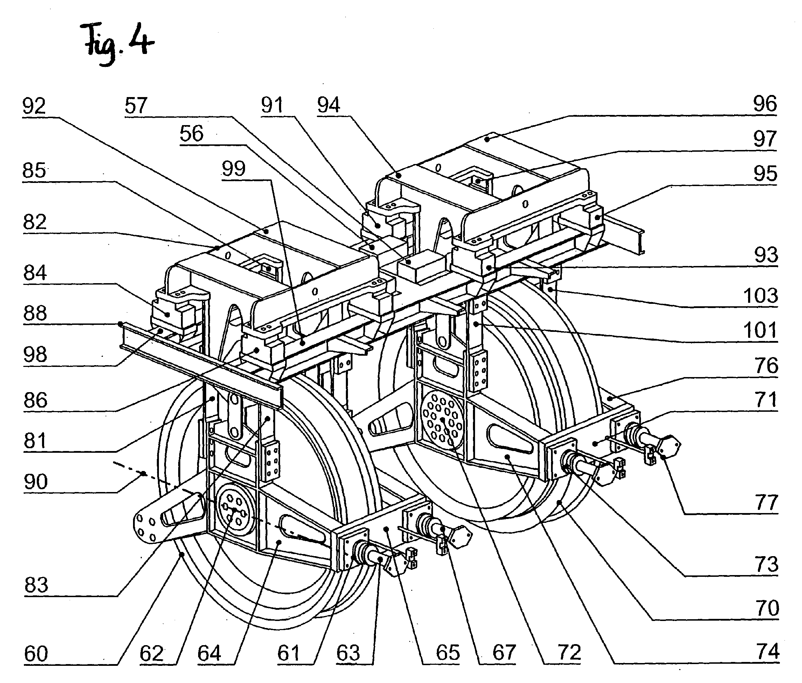

Eine praktische Ausführungsform zur Realisierung des vorstehend erläuterten Meßverfahrens zeigt Figur 4. Eine erste Seilrolle 60 ist auf einer Welle 62 drehbar gelagert, welche beidenends in gegenüberliegenden und parallelen sowie die Seilrolle 60 umgebenden Armen 64, 66 einer Gabel 61 gehalten ist. Ein beide Arme 64, 66 verbindender Riegel 65 stützt sich über zwei nebeneinander angeordnete und bezüglich ihrer Kraftaufnahme gleichgerichtete Kraftaufnehmer 63, 67 an einer nicht dargestellten Tragplatte ab, die Teil des Kopfes 10 des Auslegers 6 ist. Eine zweite Seilrolle 70 ist auf einer Welle 72 drehbar gelagert, welche beidenends in gegenüberliegenden und parallelen sowie die Seilrolle 70 umgebenden Armen 74, 76 einer Gabel 71 gehalten ist. Die Arme 74, 76 sind durch einen Riegel verbunden, welcher zwei benachbarte Kraftaufnehmer 73, 77 zweckmäßig in Form von Wägezellen, die sich an der genannten Tragplatte abstützen, mit einer in Richtung der Linie 90 wirkenden Kraft beaufschlagt, verursacht durch eine an einem Seil hängende Last, wobei das Seil gemäß Figur 4 nach links über die Seilrolle 60 oder 70 läuft. Die Wellen 62 und 72 fluchten axial, so dass die beiden Seilrollen 60 und 70 absolut parallel drehen.

Oberhalb der Wellenenden, genauer, längs einer Senkrechten auf die Verbindungslinie 90 zwischen den Mitten der Wellenenden und den Mitten der Kraftaufnehmer 63 oder 67, ist der Arm 64 über zwei beabstandete und parallele Blattfedern 81, 83, die als Querkraft-Entkopplung wirken, mit einem ersten Jochteil 82 verbunden, dessen beide gegenüberliegende Jochfüße sich über weitere Kraftaufnehmer 84, 86 auf je einem Balken 98, 99 eines Gerüstes 88 abstützen. Die Balken 98, 99 erstrecken sich parallel zueinander sowie quer zur Linie 90 in konstantem Abstand zu dieser, nehmen die aus den Kraftausleitungsteilen der Kraftaufnehmer 84, 85, 86, 89 abgeleiteten und senkrecht zur Linie 90 gerichteten Kräfte auf und sind dazu in nicht dargestellter Weise mit der erwähnten Tragplatte fest verbunden und damit Teil des Kopfes 10 sind. Man sieht, dass die Balken 98, 99 funktional dem Winkel 28 aus Figur 2 gleichen. Entsprechend ist mit dem Arm 66 ein zweites Jochteil 92 über wenigstens ein Blattfederpaar als Querkraft-Entkopplung, von dem in Figur 4 nur die Blattfeder 87 zu erkennen ist, verbunden, welches sich mit gegenüberliegenden Jochfüßen auf den Balken 98, 99 abstützt. Beide Jochteile 82 und 92 sind über Verbinder seitlich außen mit einander verbunden und auf geeignetem Abstand gehalten und bilden somit ein insgesamt vierfüßiges Joch. Zwischen jedem Jochfuß und den Balken 98, 99 sind je ein, also insgesamt vier Kraftaufnehmer 84, 85, 86, und 89 in Form von beispielsweise Wägebalken zwischengelegt, wobei jeder Jochfuß je einen der Kraftaufnehmer mit einer Kraft beaufschlagt, die senkrecht zur Verbindungslinie 90 gerichtet ist.

In entsprechender Weise sind oberhalb der Arme 74, 76 ein drittes und ein viertes Jochteil 94, 96 über Blattfedern (in Figur 4 sind nur die Blattfedern 101, 103 zu erkennen) als Kraftentkopplungsmittel mit den Armen 74, 76 verbunden, wobei sich das dritte und das vierte Jochteil über zugehörige Jochfüße und insgesamt nochmals vier Kraftaufnehmer 91, 93, 95, 97 zweckmäßig in Form von Wägebalken auf den Balken 98, 99 abstützen. Im Übrigen gilt das vorstehend im Zusammenhang mit dem ersten Jochteil 82 und dem zweiten Jochteil 92, die zusammen ein vierfüßiges Joch bilden, Beschriebene, auf das zur Verweidung von Wiederholungen Bezug genommen wird.

Es ist deutlich, dass auch bei der Ausführungsform der Erfindung nach Figur 4 für jeden der Arme 64, 66 und 74, 76 jeweils eine erste Gewichtskraft in Richtung der Verbindungslinie 90 und eine dazu senkrechte zweite Gewichtskraft durch die verschiedenen Kraftaufnehmer gemessen werden. Der Auswerteelektronik werden hierbei also insgesamt vier Ausgangssignalleitungen aus den Wägezellen und acht Ausgangssignalleitungen aus den Wägebalken zugeführt.

Im Übrigen erkennt man aus Figur 4, dass auf dem Balkengerüst 88 die Auswerteelektronik und der Sensor für die Messung des Auslegerwinkels zwischen den beiden Jochen befestigt sind, aus denen Ausgangsleitungen zum Anzeigegerät 52 in der Kranführerkabine führen. Die zugehörigen Boxen 56, 57 sind also am Ausleger 6 positioniert und daher in Figur 3 links von der gestrichelten Trennung dargestellt.

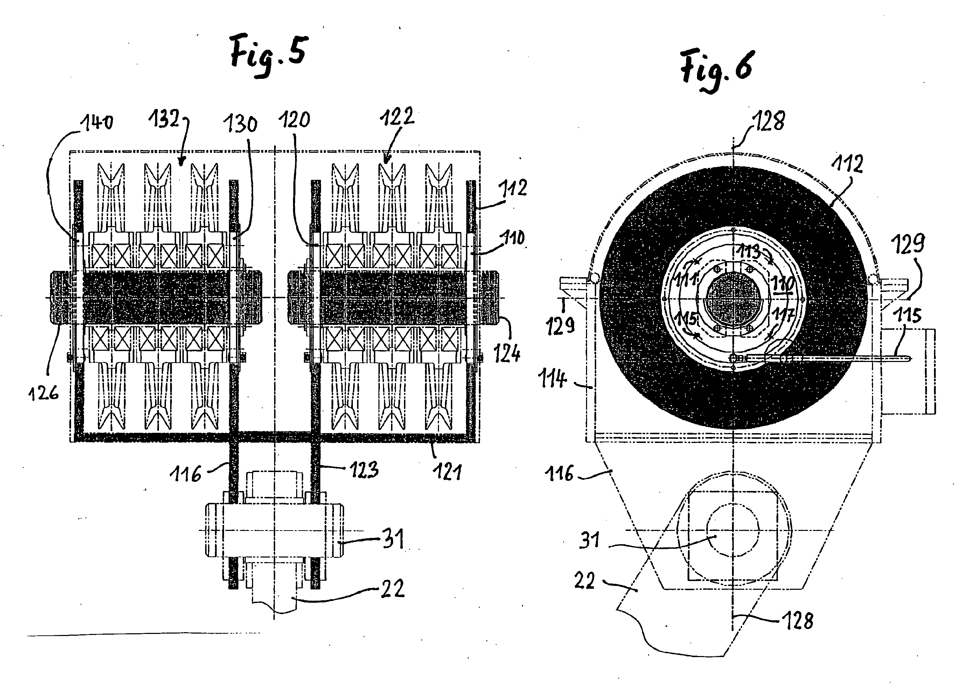

Bei der Ausführungsform der Erfindung nach Figuren 5 und 6 sind die ersten und die zweiten Kraftaufnehmer in einen Radialkraftaufnehmer 110 integriert, der die Form einer auf einer Welle 124 drehfest befestigten scheibenförmigen Platte als Verformungskörper hat. In jedem Quadranten eines Achsenkreuzes 128, 129 ist auf der Platte je ein elektromechanischer Wandler aus Dehnungsmeßstreifen appliziert. Als Kraftausleitungsteil wirkt ein Befestigungsring 112 für die Platte, welcher durch feste Streben 121, 123 fest an einem Zapfen 31 verankert ist. Der Zapfen 31 ist Teil des Auslegerkopfes 10, an welchem auch die Tragplatte 114, 116 festgelegt ist. Ein an der Platte sowie an der Tragplatte befestigter schlanker Anker 115 dient sowohl als Sicherung gegen die Folgen ungewollter Betriebszustände wie auch als Aufnahme für Signalausgangsleitungen aus den Dehnungsmeßstreifen.

Figur 5 zeigt eine Ausführungsform, bei der am Auslegerkopf zwei Rollensets 122 und 132 nebeneinander befestigt sind, wobei jedes Rollenset aus drei parallelen und gleich großen Seilrollen besteht. Beiderseits jedes Rollensets 122, 132 ist je ein Radialkraftaufnehmer 110, 120, und 130, 140 drehfest auf einer zugehörigen Welle 124 und 126 befestigt, wobei jeder dieser Radialkraftaufnehmer dem vorstehend beschriebenen Radialkraftaufnehmer 110 gleicht. Wie ersichtlich sind die jeweiligen Befestigungsringe für die scheibenförmigen Platten über feste Streben an dem Kopf des Auslegers 6 verankert. Auf jeder Platte sind wie in Figur 6 gezeigt wenigstens vier in Umfangsrichtung gleich beabstandete Dehnungsmeßstreifen-Anordnungen appliziert, die sowohl Kräfte in Richtung der Achse 128 wie auch in der dazu senkrechten Richtung der Achse 129 erfassen können.

## Patentansprüche

1. Verfahren zum Messen des Gewichtes einer an einem Seil hängenden, vornehmlich schüttfähigen Nutzlast, wobei das Seil über einen Kopf eines verschwenkbaren Auslegers eines wenigstens vorübergehend auf Grund fixierten Turmdrehkrans geführt und am Turmdrehkran verankert ist, **dadurch gekennzeichnet, dass** eine erste Gewichtskraft und eine zweite, zur ersten Gewichtskraft senkrechte Gewichtskraft gleichzeitig gemessen und die Messwerte einer elektronischen Auswerteeinrichtung zugeführt werden, wobei die Summe aus erster und zweiter Gewichtskraft proportional zu der Gewichtskraft der Nutzlast is.

2. Verfahren nach Anspruch 1, bei dem das Seil über am Kopf vorgesehene Rollen geführt ist, **dadurch gekennzeichnet, dass** die erste und die zweite Gewichtskraft an Lagern der Rollen gemessen werden.

3. Verfahren nach Anspruch 1 oder 2, **dadurch gekennzeichnet, dass** zur Messung ein oder mehrere insbesondere eichfähige Kraftaufnehmer verwendet werden.

4. Verfahren nach Anspruch 3, **dadurch gekennzeichnet, dass** als Kraftaufnehmer eine oder mehrere Wägezellen und/oder ein oder mehrere Wägebalken verwendet werden.

5. Verfahren nach einem oder mehreren der vorstehenden Ansprüche, **dadurch gekennzeichnet, dass** die Erfassung der ersten Gewichtskraft von der Erfassung der zweiten Gewichtskraft mechanisch entkoppelt wird.

6. Verfahren nach einem oder mehreren der vorstehenden Ansprüche, **dadurch gekennzeichnet dass** der Auslegerwinkel gegen die Horizontale erfasst und als erstes Korrektursignal der Auswerteeinrichtung zugeführt wird.

7. Verfahren nach einem oder mehreren der vorstehenden Ansprüche, **dadurch gekennzeichnet, dass** die Seillänge erfasst und als zweites Korrektursignal der Auswerteeinrichtung zugeführt wird.

8. Verfahren nach einem oder mehreren der vorstehenden Ansprüche, **dadurch gekennzeichnet, dass** zu einem vorgegebenen Maximalgewicht der zulässige Winkelbereich der Ausleger-Verschwenkbarkeit bestimmt wird.

9. Messvorrichtung zur Durchführung des Verfahrens nach einem der vorstehenden Ansprüche für einen auf Grund fixierten Turmdrehkran (3) mit einem schwenkbaren, einen Kopf aufweisenden Ausleger (6), wobei an dem Kopf (10) wenigstens eine Seilrolle (18) drehbar gelagert ist, um welche wenigstens ein Seil (25) geführt ist, an dem eine Nutzlast hängen kann, **dadurch gekennzeichnet, dass** die Seilrolle (32; 60, 70) sich einerseits auf wenigstens einem ersten Kraftaufnehmer (38; 63, 67, 73, 77) zur Erfassung einer ersten Gewichtskraft und auf wenigstens einem zweiten Kraftaufnehmer (46, 48; 81, 84, 91, 93, 95) zur Erfassung einer zur ersten Gewichtskraft senkrechten, zweiten Gewichtskraft abstützt, und dass Ausgangssignale der Kraftaufnehmer über Ausgangssignalleitungen (53) einer elektronischen Auswerteeinrichtung (50, 52; 56, 57) zugeführt sind.

10. Vorrichtung nach Anspruch 9, **dadurch gekennzeichnet, dass** die ersten und zweiten Kraftaufnehmer eichfähig sind.

11. Vorrichtung nach Anspruch 9 oder 10, **dadurch gekennzeichnet, dass** die ersten und die zweiten Kraftaufnehmer Wägezellen und/oder Wägebalken sind.

12. Vorrichtung nach einem oder mehreren der Ansprüche 9 bis 11, **dadurch gekennzeichnet, dass** der Kopf (10) eine Tragplatte (24; 65, 71) aufweist, auf welcher sich wenigstens ein erster Kraftaufnehmer (38; 63, 67, 73, 77) abstützt.

13. Vorrichtung nach einem oder mehreren der Ansprüche 9 bis 12, **dadurch gekennzeichnet, dass** eine Welle, auf der die Seilrolle drehbar sitzt, in wenigstens einem Arm (36; 64, 74) gelagert ist, welcher sich über wenigstens einen zweiten Kraftaufnehmer (46, 48; 84, 86 93) auf einem sich quer zur Tragplatte erstreckenden und mit der Tragplatte kraftschlüssig verbundenen Balken (28, 88) abstützt.

14. Vorrichtung nach Anspruch 13, **dadurch gekennzeichnet, dass** der Arm an einem zweifüßigen Joch (40; 82,92,94,96) aufgehängt ist, wobei zwischen jedem der beiden quer zur zweiten Gewichtskraft beabstandeten Jochfüße und dem Balken je ein zweiter Kraftaufnehmer vorgesehen ist

15. Vorrichtung nach Anspruch 13 und/oder 14, **dadurch gekennzeichnet, dass** die Welle in zwei parallelen und beabstandeten Armen gelagert ist, wobei die Seilrolle zwischen beiden Armen angeordnet ist und beide Arme an einem vierfüßigen Joch aufgehängt ist.

16. Vorrichtung nach einem oder mehreren der Ansprüche 9 bis 15, **dadurch gekennzeichnet, dass** zwischen dem ersten Kraftaufnehmer und dem zweiten Kraftaufnehmer wenigstens eine Querkraft-Entkopplung (33, 35; 37; 81, 87, 101, 103) vorgesehen ist.

17. Vorrichtung nach Anspruch 16, **dadurch gekennzeichnet, dass** zwischen dem Arm oder den Armen und den zweiten Kraftaufnehmern, bevorzugt zwischen dem Arm oder den Armen und dem Joch wenigstens eine Querkraft-Entkopplung vorgesehen ist

18. Vorrichtung nach Anspruch 16 oder 17, **dadurch gekennzeichnet, dass** wenigstens eine der Querkraft-Entkopplungen Blattfedern aufweist, die in Richtung der zweiten Gewichtskraft steif und in anderen Kraftrichtungen weich sind.

19. Vorrichtung nach einem oder mehreren der Ansprüche 16 bis 18, **dadurch gekennzeichnet, dass** wenigstens eine der Querkraftentkopplungen ein Pendeldruckstück (37) aufweist.

20. Vorrichtung nach einem oder mehreren der Ansprüche 9 bis 19, **dadurch gekennzeichnet, dass** die Auswerteeinrichtung einen Rechner (50; 56, 57), der am Ausleger (6) angeordnet ist, und ein vom Rechner gesteuertes Anzeigegerät (52) aufweist, welches in der Kranführerkabine (5) vorgesehen ist.

21. Vorrichtung nach einem oder mehreren der Ansprüche 9 bis 19, **dadurch gekennzeichnet, dass** am Ausleger (6) ein die Winkelstellung des Auslegers relativ zur Horizontalen angeordnet ist, dessen Ausgangssignale als erstes Korrektursignal der Auswerteeinrichtung, speziell dem Anzeigegerät (52) zugeführt ist

22. Vorrichtung nach einem oder mehreren der Ansprüche 9 bis 20, **dadurch gekennzeichnet, dass** eine Einrichtung jeweils die Länge des Seilabschnittes (25) von der Seilrolle (32) bis zum Greifer (32) erfasst und als zweites Korrektursignal der Auswerteeinrichtung, speziell dem Anzeigegerät (52) zugeführt ist.

23. Vorrichtung nach einem oder mehreren der Ansprüche 9 bis 22, **dadurch gekennzeichnet, dass** die Auswerteeinrichtung (50, 52) aus dem ermittelten Gewicht der im Greifer (13) enthaltenen Nutzlast den zulässigen Schwenkwinkelbereich des Auslegers (6) ermittelt und das Anzeigegerät (52) zur Anzeige des zulässigen Schwenkwinkelbereichs veranlasst.

24. Vorrichtung nach einem oder mehreren der Ansprüche 9 bis 22, **dadurch gekennzeichnet, dass** eine Kransteuerung vorgesehen ist, welche aus dem ermittelten Gewicht der im Greifer (13) enthaltenen Nutzlast den zulässigen Schwenkwinkelbereich des Auslegers (6) bestimmt und das Anzeigegerät (52) zur Anzeige des zulässigen Schwenkwinkelbereichs veranlasst.

25. Vorrichtung nach einem oder mehreren der Ansprüche 9 bis 24, **dadurch gekennzeichnet, dass** der erste Kraftaufnehmer und der zweite Kraftaufnehmer in einen Radialkraftaufnehmer (Figur 5) integriert sind, welcher mehrere elektromechanische Wandler zur Erfassung der ersten und der zweiten Gewichtskraft aufweist

26. Vorrichtung nach Anspruch 23, **dadurch gekennzeichnet, dass** der Radialkraftaufnehmer wenigstens eine sich auf dem Kopf des Auslegers abstützende Scheibe aufweist, die auf einer die Rolle tragenden Welle befestigt ist und auf der die elektromechanischen Wandler appliziert sind.

27. Vorrichtung nach Anspruch 23 oder 24, **dadurch gekennzeichnet, dass** beiderseits der Rolle je eine elektromechanische Wandler tragende Scheibe vorgesehen ist.

28. Vorrichtung nach einem der Ansprüche 23 bis 25, **dadurch gekennzeichnet, dass** auf der Scheibe wenigstens vier in Umfangsrichtung gleich beabstandete elektromechanische Wandler befestigt sind.
